(19) Europäisches Patentamt
European Patent Office
Office européen des brevets

(11) Veröffentlichungsnummer : **0 207 002 B1**

(12) # EUROPÄISCHE PATENTSCHRIFT

(45) Veröffentlichungstag der Patentschrift : **27.03.91 Patentblatt 91/13**

(51) Int. Cl.$^5$ : **B01D 19/04,** D06P 1/00, D21H 21/12

(21) Anmeldenummer : **86810284.9**

(22) Anmeldetag : **23.06.86**

(54) **Entschäumungsmittel für wässrige Systeme und ihre Verwendung.**

Die Akte enthält technische Angaben, die nach dem Eingang der Anmeldung eingereicht wurden und die nicht in dieser Patentschrift enthalten sind.

(30) Priorität : **27.06.85 CH 2719/85**

(43) Veröffentlichungstag der Anmeldung : **30.12.86 Patentblatt 86/52**

(45) Bekanntmachung des Hinweises auf die Patenterteilung : **27.03.91 Patentblatt 91/13**

(84) Benannte Vertragsstaaten : **AT BE CH DE FR GB IT LI LU NL**

(56) Entgegenhaltungen :
**FR-A- 2 313 958**
**FR-A- 2 314 245**
**FR-A- 2 440 216**
**US-A- 4 055 393**

(73) Patentinhaber : **CIBA-GEIGY AG**
**Klybeckstrasse 141**
**CH-4002 Basel (CH)**

(72) Erfinder : **Abel, Heinz**
**Egertenstrasse 5**
**CH-4153 Reinach (CH)**
Erfinder : **Töpfl, Rosemarie**
**Dorneckstrasse 68**
**CH-4143 Dornach (CH)**

**EP 0 207 002 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind silikonölfreie Entschäumungsmittel für wässrige Systeme, verdünnte Entschäumungsmittelzubereitungen sowie ein Verfahren zum Entschäumen von wässrigen Systemen.

Es ist bereits bekannt wässrige Systeme mit Entschäumungsmitteln, z.B. Silikonölen zu behandeln um eine Schaumbildung möglichst weitgehend zu verhindern oder entstandenen Schaum wieder zu beseitigen (vgl. z.B. die US-A 4 071 768). Solche Antischaumittel auf der Basis von Silikonölemulsionen sind gegen hohe Scherkräfte wie sie während der Färbung, besonders Jet-Färbung von Fasersubstraten vorkommen, empfindlich. Dabei wird das Silikonöl aufgrund seines höheren spezifischen Gewichtes ausgeschieden, was zur Bildung von Flecken auf dem Substrat führt. Zur Verhinderung dieser Nachteile muss das Antischaummittel ständig nachdosiert werden, was sich auf die Wirtschaftlichkeit des Färbeverfahrens negativ auswirkt.

Es wurden nun Entschäumungsmittel gefunden, welche diese Nachteile nicht aufweisen.

Gegenstand der vorliegenden Erfindung sind daher silikonölfreie Entschäumungsmittel für wässrige Systeme, welche dadurch gekennzeichnet sind, dass sie

(1) 6 bis 12 Gew.% (A) eines Umsetzungsproduktes aus einem propoxylierten Polyol, einer aliphatischen Dicarbonsäure mit 2 bis 10 C-Atomen oder ihrem Anhydrid und einem Umsetzungsprodukt aus einem Polyalkylenglykol und einer Fettsäure oder (B) eines Umsetzungsproduktes aus einem propoxylierten Polyol, einer aliphatischen Dicarbonsäure mit 2 bis 10 C-Atomen oder ihrem Anhydrid, einem höheren aliphatischen Alkohol und einem Polyethylenglykol.

(2) 20 bis 50 Gew.% eines Dialkylesters einer ungesättigten Dicarbonsäure.

(3) 20 bis 50 Gew.% eines Mineralöls

(4) 5 bis 10 Gew.% eines nichtionogenen Emulgators

(5) 5 bis 10 Gew.% eines anionischen Emulgators und

(6) 0,5 bis 1,5 Gew.% eines Alkylendiamids enthalten.

Als Komponente (1) (A) des erfindungsgemässen Entschäumungsmittels kommt ein Propylenoxidumsetzungsprodukt aus

(a) einem mindestens 3-wertigen, aliphatischen Alkohol mit 3 bis 10 C-Atomen,

(b) Propylenoxid,

(c) einer aliphatischen ungesättigten Dicarbonsäure oder deren Anhydrid mit 4 bis 10 C-Atomen,

(d) einem Polyethylenglykol der Formel $HO-(CH_2CH_2O)_nH$ worin n eine n ganze Zahl von 1 bis 40 bedeutet und

(e) einer Fettsäure mit 16 bis 20 C-Atomen in Betracht.

Geeignete Komponente (a) sind hier 3- bis 6-wertige Alkanole mit 3 bis 6 C-Atomen. Diese Alkanole können verzweigt oder unverzweigt sein, z.B. Glycerin, Pentaerytrit, Sorbit oder Trimethylolpropan. Pentaerytrit ist bevorzugt.

Als Komponente (b) kommt nur das 1,2-Propylenoxid in Betracht.

Besonders geeignete Komponenten (c) sind ethylenisch ungesättigte Dicarbonsäuren oder deren Anhydride, z.B. die Fumar-, Malein- oder Itaconsäure, ferner auch die Mesacon-, Citracon- oder Methylenmalonsäure oder die Octen- oder Decensäure. Von den Anhydriden dieser Säuren ist Maleinsäureanhydrid bevorzugt.

Als Komponente (d) kommen besonders das Ethylen- und Diethylenglykol oder Polyethylenglykol mit einem mittleren Molekulargewicht von 200 bis 1000, vorzugsweise 300 bis 600 und besonders 400 bis 500 in Betracht.

Bei der Komponente (e) handelt es sich um gesättigte und ungesättigte Säuren, wie die Palmitin-, Stearin-, Arachin-, Palmitolein-, Oel-, Linol-, Linolen-, Ricinol- oder Eicosensäure. Bevorzugt ist die Stearinsäure.

Die Komponente (1) kann die Säuregruppen in freier Form oder in Salzform enthalten. Die Salze werden nach bekannter Weise durch Zugabe von Basen, wie Ammoniak oder Alkalihydroxide, z.B. Natrium- oder kaliumhydroxid zu der Säure erhalten.

Die Komponenten (1) (A) können wie in der US-A 4 055 393 beschriben, hergestellt werden. Je nach Art der eingesetzten Komponenten und der Molverhältnisse handelt es sich bei den einzusetzenden Komponenten (1) (A) sowohl um nieder- als auch um höherkondensierte Produkte. Niederkondensierte Produkte werden dann erhalten, wenn die einzelnen Komponenten in äquivalenten Mengen eingesetzt werden, so dass möglichst keine Polykondensationen und Vernetzungen zwischen Polyalkohol, Dicarbonsäure und Diol stattfinden. Höherkondensierte Produkte entstehen dagegen wenn die Zwischenprodukte überschüssige, noch reaktionsfähige, Hydroxylgruppen aufweisen, da diese weiter kondensieren und zum Teil sich vernetzen können. Typische Vertreter solcher nieder- und höherkonzentrierter Produkte sind in der US-A 4 055 393 aufgeführt.

Propylenoxidumsetzungsprodukte, die als Komponente (1) (A) im Vordergrund des Interesses liegen, sind

solche aus
(a) Pentaerytrit
(b) Propylenoxid
(c) Maleinsäureanhydrid
(d) Polyethylenglykol mit einem durchschnittlichen Molekulargewicht von 300 bis 600 und
(e) stearin- oder Oelsäure.

Als Komponente (1) (B) des erfindungsgemässen Entschäumungsmittels kommt ein Propylenoxidumsetzungsprodukt aus den Komponenten (a), (b), (c), (d) und (f) einem Fettalkohol mit 12 bis 18 C-Atomen in Betracht.

Der Fettalkohol (f) kann z.B. der Lauryl-, Myristyl-, Cetyl- und vorzugsweise Stearyl- oder Oleylalkohol sein.

Als Komponenten (1) (B) sind besonders solche Umsetzungsprodukte zu erwähnen, welche wiederkehrende Einheiten der Formel

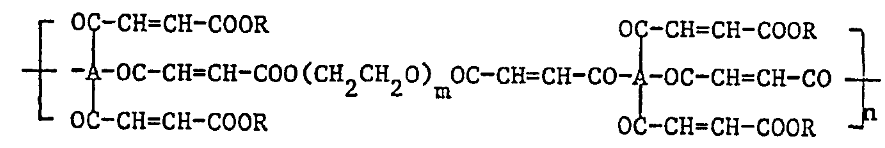

aufweisen, worin R Lauryl, Myristyl, Cetyl, Stearyl oder Oleyl, m eine ganze Zahl von 4 bis 40, vorzugsweise 4 bis 34, n eine Zahl von 2 bis 6 und A den

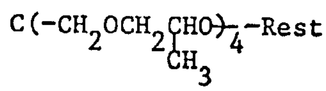

bedeuten.

Propylenoxidumsetzungsprodukte, die als Komponente (1) (B) bevorzugt sind, sind solche aus
(a) Pentaerytrit
(b) Propylenoxid
(c) Maleinsäureanhydrid
(d) Polyethylenglykol mit einem durchschnittlichen Molekulargewicht von 180 bis 1600, vorzugsweise 200 bis 1500 und
(f) Stearyl- oder Oleylalkohol

Als Komponente (2) kommen Dialkylester von ethylenisch ungesättigten Dicarbonsäuren mit 2 bis 12 C-Atomen je Alkylteil in Betracht. Die Dialkylester werden in an sich bekannter Weise durch Umsetzung einer Dicarbonsäure wie Malein- oder Fumarsäure oder deren Anhydrid mit einem Alkanol mit 2 bis 12 C-Atomen, wie Aethanol, Propanol, Isopropanol, Butanol und dessen Isomere, Amylalkohol und dessen Isomere, n-Hexylalkohol, n- Octylalkohol, Caprylalkohol, 2-Ethylhexanol, 2-Butyloctanol, Trimethylhexanol, n-Decylalkohol und Laurylalkohol hergestellt. Bevorzugt ist das Umsetzungsprodukt aus Maleinsäure bzw. deren Anhydrid mit 2-Ethylhexanol.

Als Komponente (3) können handelsübliche kohlenwasserstoffgemische verwendet werden, z.B. Paraffinöl oder solche aus 45 bis 70 Gew.% Paraffinen, 25 bis 45 Gew.% Naphthenen und 5 bis 10 Gew.% Aromaten. Solche Gemische weisen in der Regel einen Flammpunkt oberhalb 100°C, einen sogenannten "Pourpoint" von – 3 bis – 60°C und einen Anilinpunkt von 70 bis 110°C auf. Beispiele solcher handelsüblicher kohlenwasserstoffgemische sind die Mineralöle ESSO 301®, ESSO 302®, ESSO 303®, ESSO 304®, ESSO 310®, ESSO 311®, ESSO 312®, ESSO 320®, und Shell Oil L 6189®.

Als Komponente (4) kommen Alkohol- oder Alkylphenolalkylenoxidumsetzungsprodukte, z.B. Alkylenoxidumsetzungsprodukte von aliphatischen Alkoholen mit 4 bis 22 kohlenstoffatomen, die bis zu 80 Mol Ethylenoxid und/oder Propylenoxid angelagert enthalten, in Betracht.

Die Alkohole können vorzugsweise 4 bis 18 kohlenstoffatome enthalten, sie können gesättigt, verzweigt oder geradkettig sein und können allein oder im Gemisch eingesetzt werden. Alkohole mit verzweigten ketten sind bevorzugt.

Es können natürliche Alkohole, wie z.B. Myristylalkohol, Cetyalkohol, Stearylalkohol, Oleylalkohol, Arachidylalkohol oder Behenylalkohol oder synthetische Alkohole, wie insbesondere Butanol, 2-Aethylhexanol, Amylalkohol, n-Hexanol, ferner Triäthylhexanol, Trimethylnonylalkohol oder die Alfole (Handelsname – Continental Oil Company) verwendet werden. Bei den Alfolen handelt es sich um lineare primäre Alkohole. Die Nummer hinter dem Namen gibt die durchschnittliche kohlenstoffzahl des Alkohols an ; so ist z.B. Alfol (1218) ein

Gemisch aus Decyl-, Dodecyl-, Tetradecyl-, Hexadecyl- und Octadecylalkohol. Weitere Vertreter sind Alfol (810), (1014), (12), (16), (18), (2022).

Bevorzugte Aethylenoxid-Alkohol-Umsetzungsprodukte können z.B. durch die Formel

$$R_3O(CH_2CH_2O)_sH \quad (1)$$

dargestellt werden, worin $R_3$ ein gesättigter oder ungesättigter kohlenwasserstoffrest, vorzugsweise ein Alkyl- oder Alkenylrest mit 8 bis 18 kohlenstoffatomen und s eine ganze Zahl von 1 bis 80, vorzugsweise von 1 bis 30 ist.

Als Komponente (4) kommen ferner Umsetzungsprodukte aus Aethylenoxid und/oder 1,2-Propylenoxid und Alkylphenolen mit 4 bis 12 kohlenstoffatomen im Alkylteil, wobei das Phenol ein oder mehrere Alkylsubstituenten enthalten kann, in Betracht. Vorzugsweise entsprechen diese Verbindungen der Formel

(2) 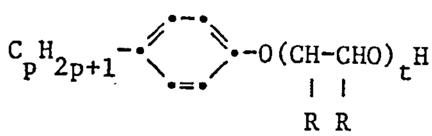 ,

worin R Wasserstoff oder höchstens einer der beiden Reste R Methyl, p eine Zahl von 4 bis 12, vorzugsweise 8 bis 9, und t eine Zahl von 1 bis 60, insbesondere von 1 bis 20 und vorzugsweise 1 bis 6 ist.

Gegebenenfalls können diese Alkohol-Alkylphenol-Aethylenoxid/1,2-Propylenoxid-Addukte noch kleinere Anteile von Blockpolymeren aus den genannten Alkylenoxiden enthalten.

Weitere Umsetzungsprodukte, die als Komponente (4) in Betracht kommen, sind Polyoxyethylenderivate der Fettsäureester der Ether des Sorbitans mit 4 Mol Polyethylenglykol, z.B. das Laurat, Palmitat, Stearat, Tristearat, Oleat und Trioleat der genannten Ether wie die Tween-Marken der Atlas Chemicals Division. Bevorzugt ist das Tristearat des Ethers des Sorbitans mit 4 Mol des Polyethylenglykols der Formel

$$H(CH_2CH_2)_{65}OH.$$

Als Komponente (5) sind veresterte Alkylenoxidaddukte, wie z.B. saure Estergruppen von anorganischen oder organischen Säuren enthaltende Anlagerungsprodukte von Alkylenoxiden, besonders Aethylenoxid und/oder Propylenoxid, an aliphatische, insgesamt mindestens 8 kohlenstoffatome aufweisende organische Hydroxyl-, Carboxyl- gegebenenfalls auch Amino-oder Amidoverbindungen bzw. Mischungen dieser Verbindungen. Diese sauren Ester können als freie Säuren oder als Salze z.B. Alkalimetall-, Erdalkalimetall-, Ammonium- oder Aminsalze vorliegen.

Die Herstellung dieser anionischen Tenside erfolgt nach bekannten Methoden, indem man an die genannten organischen Verbindungen mindestens 1 Mol vorzugsweise mehr als 1 Mol z.B. 2 bis 60 Mol Aethylenoxid oder alternierend in beliebiger Reihenfolge Aethylenoxid und Propylenoxid anlagert und anschliessend die Anlagerungsprodukte veräthert bzw. verestert und gegebenenfalls die Aether bzw. die Ester in ihre Salze überführt. Als Ausgangsstoffe kommen z.B. höhere Fettalkohole, d.h. Alkanole oder Alkenole mit 8 bis 22 kohlenstoffatomen, alicyclische Alkohole, Phenylphenole, Alkylphenole mit einem oder mehreren Alkylsubstituenten, der bzw. die zusammen mindestens 10 kohlenstoffatome aufweisen oder Fettsäuren mit 8 bis 22 kohlenstoffatomen in Betracht.

Besonders geeignete anionische Tenside entsprechen der Formel

$$(3) \qquad R_1\text{-}A\text{-}(CH_2\underset{\displaystyle R_2}{\underset{|}{C}}HO)_n\text{-}X \quad ,$$

worin $R_1$ ein aliphatischer kohlenwasserstoffrest mit 8 bis 22 kohlenstoffatomen oder ein cycloaliphatischer, aromatischer oder aliphatischaromatischer kohlenwasserstoffrest mit 10 bis 22 kohlenstoffatomen, $R_2$ Wasserstoff oder Methyl,

$-A-O-$ oder $-\overset{\overset{\displaystyle O}{\|}}{C}-O-$,

X der Säurerest einer anorganischen, Sauerstoff enthaltenden Säure, der Säurerest einer mehrbasischen Carbonsäure oder ein Carboxylalkylrest und n eine Zahl von 1 bis 50 ist.

Der Rest $R_1$–A– in den Verbindungen der Formel (3) leitet sich z.B. von höheren Alkoholen wie Decyl-, Lauryl-, Tridecyl-, Myristyl-, Cetyl-, Stearyl-, Oleyl-, Arachidyl- oder Behenylalkohol ab ; ferner von alicyclischen Alkoholen, wie Hydroabietylalkohol ; von Fettsäuren, wi Capryl-, Caprin-, Laurin-, Myristin-, Palmitin-, Stearin-, Arachin-, Behen-, kokosfett- ($C_8$-$C_{18}$), Decen-, Dodecen-, Tetradecen-, Hexadecen-, Oel-, Linol-, Linolen-, Eikosen-, Dokosen- oder Clupanodonsäure ; von Alkylphenolen, wie Butyl-, Hexyl-, n-Octyl-, n-Nonyl-, p-tert. Octyl-, p-tert. Nonyl-, Decyl-, Dodecyl-, Tetradecyl- oder Hexadecylphenol oder von Arylphenolen, wie den o- oder p-Phenylphenolen. Bevorzugt sind Reste mit 10 bis 18 Kohlenstoffatomen, insbesondere solche, die sich von den Alkylphenolen ableiten.

Der Säurerest X ist in der Regel der Säurerest einer mehrbasischen, insbesondere niedermolekularen Mono- oder Dicarbonsäure wie z.B. von Maleinsäure, Malonsäure, Bernsteinsäure oder Sulfobernsteinsäure, oder ist ein Carboxyalkylrest, insbesondere ein Carboxymethylrest (abgeleitet insbesondere von Chloressigsäure) und ist über eine Aether- oder Esterbrücke mit dem Rest $R_1$-A-($CH_2$ $CHR_1$ $O)_m$-verbunden. Insbesondere leitet sich X jedoch von anorganischen mehrbasischen Säuren ab, wie Orthophosphorsäure und Schwefelsäure. Der Säurerest X liegt vorzugsweise in Salzform, d.h. z.B. als Alkalimetall-, Ammonium- oder Aminsalz, vor. Beispiele für solche Salze sind Natrium-, kalzium-, Ammonium-, Trimethylamin-, Aethanolamin-, Diäthanolamin- oder Triäthanolaminsalze. Bei den Alkylenoxydeinheiten $\left(CH_2CHR_2O\right)$ der Formel (3) handelt es sich in der Regel um Aethylenoxid und 1,2-Propylenoxideinheiten, letztere befinden sich vorzugsweise im Gemisch mit Aethylenoxideinheiten in den Verbindungen der Formel (3).

Von besonderem Interesse sind nun die anionischen Verbindungen der Formel

$$R_3O\ (CH_2CH_2O)_n - X, \quad (4)$$

worin $R_3$ ein gesättigter oder ungesättigter kohlenwasserstoffrest mit 8 bis 22 Kohlenwasserstoffatomen, o-Phenylphenol oder Alkylphenyl mit 4 bis 12 kohlenstoffatomen im Alkylteil ist, und X und n die angegebenen Bedeutungen haben.

Von den Verbindungen, die sich von Alkylphenyl-Aethylenoxidaddukten ableiten, sind ferner solche der Formeln

(5) 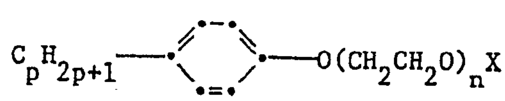

und

(6) 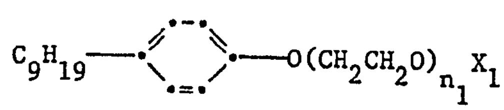

worin p eine Zahl von 4 bis 12, n eine ganze Zahl von 1 bis 20, $n_1$ eine ganze Zahl von 1 bis 10, $X_1$ ein Phosphorsäurerest, der gegebenenfalls in Salzform vorliegt und X die angegebene Bedeutung hat, besonders bevorzugt.

Als Komponente (6) sind Alkylendiamide der Formel

$$R_3\text{-NH-}R_4\text{-NH-}R_3$$

worin $R_3$ einen Alkanoylrest mit 14 bis 22 C-Atomen und $R_4$ einen Alkylenrest mit 2 bis 6 C-Atomen bedeuten, zu erwähnen.

Als Alkanoylreste $R_3$ kommen der Myristoyl-, Palmitoyl-, Arachinoyl-, Behenoyl- und vorzugsweise der Stearoylrest sowie Mischungen davon in Betracht.

$R_4$ ist vorzugsweise der Ethylenrest.

Bevorzugte Entschäumungsmittel enthalten

| | |
|---|---|
| 7-9 | Gew.% der Komponente (1) |
| 35-38 | Gew.% der Komponente (2) |
| 35-38 | Gew.% der Komponente (3) |
| 7-9 | Gew.% der Komponente (4) |
| 7-9 | Gew.% der Komponente (5) und |
| 0,5-1,5 | Gew.% der Komponente (6) |

Die erfindungsgemässen Entschäumungsmittel können auch 0 bis 3 Gew.% Aluminiummono-, -di- oder -tristearat, Calciumdistearat, Magnesium- distearat oder Glycerinmonostearat, vorzugsweise aber Aluminiumdistearat enthalten.

Die erfindungsgemässen Entschäumungsmittel können dadurch hergestellt werden, dass man die Komponenten (1), (2) und (6) sowie gegebenenfalls das Aluminiumstearat unter Rühren bei Raumtemperatur mischt, das Gemisch unter ständigem Rühren auf Temperaturen von 50 bis 150°C, vorzugsweise 90 bis 120°C, während 10 bis 60 Minuten bis zur vollständigen Lösung erwärmt, die noch heisse Lösung in eine Vorlage bestehend aus den Komponenten (3), (4) und (5) unter Rühren eintropft und danach auf Raumtemperatur unter Rühren abkühlen lässt, wobei man opale, leicht viskose, bräunliche, lagerstabile Flüssigkeiten erhält.

Die erfindungsgemässen Entschäumungsmittel können in sauren oder alkalischen Zubereitungen (pH-Wert-Bereich etwa 1 bis 12) sowie in einem weiten Temperaturbereich, z.B. 20 bis 150°C, verwendet werden, ohne ihre Wirkung zu verlieren. Für die praktische Anwendung kann man sie unverdünnt oder nach Verdünnung mit organischen Lösungsmitteln oder Wasser in die wässrigen Systeme geben, wobei etwa 0,01 bis 10 g/l (kg), [0,01 bis 5 g/l (kg)] eingesetzt werden können.

Gegebenenfalls kann man die erfindungsgemässen Entschäumungsmittel auch in Form verdünnter wässriger oder organischer Zubereitungen (Lösungen) einsetzen, z.B. als 1 bis 99%ige wässrige Lösungen oder Lösungen in einem organischen Lösungsmittel, z.B. 2-Aethyl-n-Hexanol oder Toluol oder Lösungsmittelgemischen. Diese verdünnten Entschäumungsmittelzubereitungen erleichtern die Dosierung, z.B. beim Einsatz in Druckpasten oder Färbebädern

Die erfindungsgemässen Entschäumungsmittel können in den verschiedensten Verfahren eingesetzt werden, in denen wässrige oder wasserhaltige Zubereitung verwendet werden, die leicht zum Schäumen neigen, wie z.B.

a) Färben von Wolle mit 1 : 1- oder 1 : 2-Metallkomplexfarbstoffen, Säure-oder Reaktivfarbstoffen ; Auszieh- oder kontinuierliche Färbeverfahren für das Färben von synthetischen Polyamidfasern mit Säurefarbstoffen oder Dispersionsfarbstoffen ; das Färben von Polyesterfasern mit Dispersionsfarbstoffen ; das Färben von cellulosischen Fasern mit Reaktiv-und direktziehenden Farbstoffen ; das Färben von Polyacrylnitrilfasern mit kationischen Farbstoffen ;

b) Ausrüst-(Veredlungs)-verfahren für Textilmaterialien : Filz- und Schrumpffestmachen von Wolle oder Wolle enthaltenden Fasermischungen ; Flammfest- und knitterfestmachen von cellulosischen Fasermaterialien ; Oel-, Wasser- und Schmutzabweisendmachen von verschiedenen Fasersubstraten ; Antistatisch- und Weichgriffigmachen von verschiedenen Fasersubstraten ; optisches Aufhellen von verschiedenen Fasersubstraten und

c) Papierherstellung (Papierfasersuspensionen) und Papierausrüstung, insbesondere beim Leimen von Papier mit wässrigen Harzzubereitungen oder bei der Oberflächenbehandlung von Papier (Papierstreichmassen).

Werden die genannten Mittel in Färbe- und Ausrüstverfahren für Textilmaterialien eingesetzt, so wird eine gute Schaumdämpfung erreicht, auch wenn andere leicht schäumende Hilfsmittel (Tenside) mitverwendet werden.

In den nachfolgenden Beispielen sind die Prozente Gewichtsprozente.

## Herstellungsvorschriften

### Herstellungsvorschrift A : Komponente (1)

In einem 1,5 l Sulfierkolben mit Rührer, Thermometer und Rückflusskühler werden 126,5 g des kondensationsproduktes aus 1 Mol Pentaerytrit und 4-5 Mol Propylenoxid (Molekulargewicht 450), 125,2 g Maleinsäure, 0,6 g 2,6-Di-tert.-butyl-4-methylphenol vorgelegt, unter Rühren auf 90°C erwärmt und 90 minuten lang bei dieser Temperatur gehalten. Danach werden 843 g Polyethylenglykol-400-monostearat und 3 g konzentrierter Schwefelsäure zugegeben und der Rückflusskühler durch einen Destillationsaufsatz ersetzt. Man erwärmt das Gemisch auf 130°C, hält es 5 Stunden lang bei dieser Temperatur unter Wasserstrahlvakuum, wobei etwa 20 ml Wasser abdestillieren. Das kondensationsprodukt wird auf 60°C abgekühlt, mit 8 g Natriumhydroxid (30%ige Lösung) versetzt, 10 Minuten lang verrührt und warm abgefüllt. Man erhält 1025 g eines braungelben Produktes, das beim Abkühlen auf Raumtemperatur wachsartig erstarrt.

Ersetzt man in der obigen Herstellungsvorschrift

a) das kondensationsprodukt aus 1 Mol Pentaerytrit mit 4-5 Mol Propylenoxid durch ein kondensationsprodukt aus entweder 1 Mol Glycerin und 5 Mol Propylenoxid oder 1 Mol Sorbitol und 8 Mol Propylenoxid,

b) die Maleinsäure durch die Fumarsäure bzw. das Maleinsäureanhydrid und

c) das Polyethylenglykol-400-monostearat durch das Polyethylenglykol-1000- bzw. -750-monostearat, und verfährt sonst wie angegeben, so erhält man ähnliche als Komponente (1) einsetzbare Produkte.

Herstellungsvorschrift B : Komponente (2)

In einem Sulfierkolben mit Destillationsaufsatz, Rührer und Thermometer werden 49 g Maleinsäureanhydrid, 140 g 2-Ethylhexanol, 2 g Natriumhydrogensulfat und 0,2 g Hydrochinonmonomethylether vorgelegt, unter Rühren und Ueberleiten von Stickstoff auf 150°C erhitzt, wobei Wasser und überschüssiges 2-Ethylhexanol während 4 Stunden abdestilliert werden. Danach wird das Reaktionsgemisch bei 150°C während 30 Minuten unter Wasserstrahlvakuum gehalten, auf Raumtemperatur abgekühlt und das abgeschiedene Natriumhydrogensulfat abfiltriert. Man erhält 179 g des Esters als gelbliche, klare Flüssigkeit.

Aehnliche als Komponente (2) einsetzbare Ester erhält man, wenn in der Herstellungsvorschrift B bei sonst gleicher Arbeitsweise das Maleinsäureanhydrid und das 2-Ethylhexanol durch Maleinsäure bzw. Trimethylhexanol ersetzt werden.

Herstellungsvorschrift C : Komponente (6)

In einem Reaktionskolben mit Rührer, kühler, Tropftrichter, Thermometer und Gaseinleitungsrohr werden 1098 g Stearinsäure vorgelegt und geschmolzen. Unter Stickstoffatmosphäre wird auf 150°C aufgeheizt und dann innerhalb von 30 Minuten 130 g Ethylendiamin zugetropft, wobei Wasser abdestilliert wird. Man heizt das Reaktionsgemisch auf 174°C bis kein Destillat mehr ausgeschieden wird. Das Reaktionsgemisch wird auf 145°C abgekühlt und auf ein Blech gegossen, erstarren gelassen und gemahlen. Man erhält ein hellbeiges Pulver vom Smp. 141-142°C.

Verwendet man, bei sonst gleicher Arbeitsweise, anstelle von Stearinsäure, das technische Gemisch von Stearinsäure und Palmitinsäure, so erhält man ein ähnliches als Komponente (6) einsetzbares Produkt. Aehnliche Produkte werden auch erhalten, wenn man im Molverhältnis 2 : 1 Behensäure mit Trimethylendiamin oder Hexamethylendiamin umsetzt.

Beispiel 1 : In einem Becherglas werden unter ständigem Rühren 5 g der Komponente (6) gemäss Herstellungsvorschrift C, 7,5 g Aluminium-distearat, 40 g der Komponente (1) gemäss Herstellungsvorschrift A und 185 g der Komponente (2) gemäss Herstellungsvorschrift B auf 110°C erwärmt und bis zur vollständigen Lösung der Komponente (6) weiter gerührt. Die heisse Lösung wird in ein Gemisch von 185 g Mineralöl (z.B. Shell Oil L 6189®), 37,5 g eines anionischen Emulgators (z.B. Tween 65®) und 37,5 g eines nichtionischen Emulgators (z.B. Nonylphenol-decaglykolether-phosphat) unter ständigem Rühren zugegeben und abkühlen gelassen. Man erhält eine opale, leicht viskose, bräunliche Dispersion.

Aehnliche Dispersionen werden erhalten, wenn bei sonst gleicher Verfahrensweise als Mineralöl z.B. die unter den Handelsmarken Esso-Oel 302® und Esso-Oel 320® erhältlichen Oele, als anionischer Emulgator, z.B. das Umsetzungsprodukt von 1 Mol Sojaöl mit 36 Mol Ethylenoxid oder von 1 Mol eines Gemisches von Cetylalkohol und Laurylalkohol (Gewichtsverhältnis 50 : 50) mit 18 Mol Ethylenoxid oder von 1 Mol p-Nonylphenol mit 35 Mol Ethylenoxid und als nichtionischer Emulgator der Phosphorsäureester des Adduktes von 35 Mol oder 100 Mol Ethylenoxid an 1 Mol Nonylphenol oder der Sulfaminsäureester des Umsetzungsproduktes von 1 Mol p-Nonylphenol mit 2 Mol Ethylenoxid verwendet.

Beispiel 2 : Auf einem kurzflotten-Jet werden 100 kg Baumwolltricot in 600 Liter entionisiertem Wasser bei 40°C eingenetzt. In die Flotte gibt man dann 36 kg Natriumchlorid, 5 kg des Farbstoffes der Formel

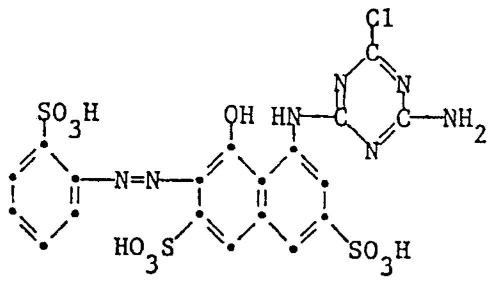

sowie 0,5 kg der Emulsion gemäss Beispiel 1.Man färbt das Gewebe auf dem kurzflotten-Jet während 45 Min. bei 40°C. Dann erfolgt der Zusatz von 0,6 kg kalziniertem Natriumcarbonat und nach weiteren 5 Min. von 1,2 kg einer wässrigen 36%igen Natriumhydroxydlösung. Dann wird das Tricot während weiteren 40 Min. gefärbt, anschliessend gespült und nachgewaschen. Es resultiert eine echte, egale Rotfärbung des Tricots. Während des Färbeprozesses tritt keine Störung des Warenlaufes auf. Eine Schaumbildung ist nicht festzustellen. Färbt man in gleicher Weise, jedoch ohne Zusatz der Emulsion gemäss Beispiel 1 so tritt starkes Schäumen und gegebenenfalls eine Störung im Warenlauf ein.

Beispiel 3 : In einem Muff-Färbeapparat werden 100 kg eines Garnes aus Polyäthylenglykolterephthalat in 1200 Liter Wasser auf 60°C erwärmt. Hierauf werden folgende Zusätze der Flotte zugegeben :

| | |
|---|---|
| 2400 g | Ammoniumsulfat |
| 2000 g | einer 70%igen, wässrigen Lösung des Ammoniumsalzes des sauren Schwefelsäureesters eines kondensationsproduktes aus Glycerin und Propylenoxyd mit einem Molekulargewicht von 4200 |
| 450 g | der Dispersion gemäss Beispiel 1 |
| 3700 g | eines Farbstoffes der Formel |

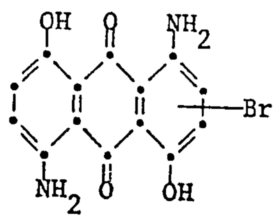

Man stellt das Färbebad mit 85%iger Ameisensäure auf pH 5 ein und erwärmt es während 45 Minuten auf 130°C, worauf das Garn während 60 Minuten bei dieser Temperatur gefärbt wird. Anschliessend wird das Bad abgekühlt und das gefärbte Garn gespült und getrocknet. Man erhält eine farbstarke, egale und reibechte blaue Färbung des so gefärbten Garnes. Das Färbebad, das Ueberlaufgefäss und die Muffs werden durch den Zusatz der Emulsion gemäss Beispiel 1 vollständig entlüftet. Arbeitet man ohne diesen Zusatz, so kommt es zu einem Lufteinschluss in den Muffs und zu weniger gefärbten Garnkreuzungsstellen.

Beispiel 4 : 100 kg eines Gewebes aus 50% Baumwolle und 50% Polyethylenglykolterephthalat werden in einer HT (Hochtemperatur)-Haspelkufe mit 3000 T einer wässrigen Flotte, die

54 g eines Farbstoffes der Formel

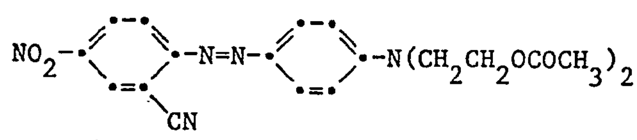

27 g eines Farbstoffes der Formel

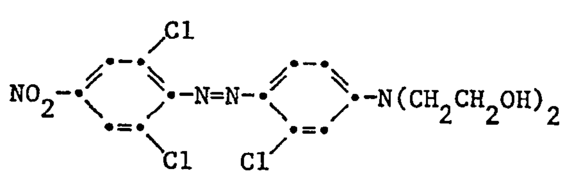

130 g eines Farbstoffes der Formel

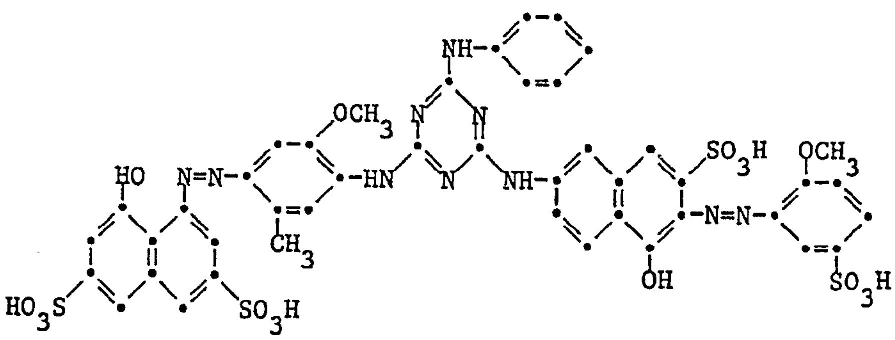

10 g eines Farbstoffes der Formel

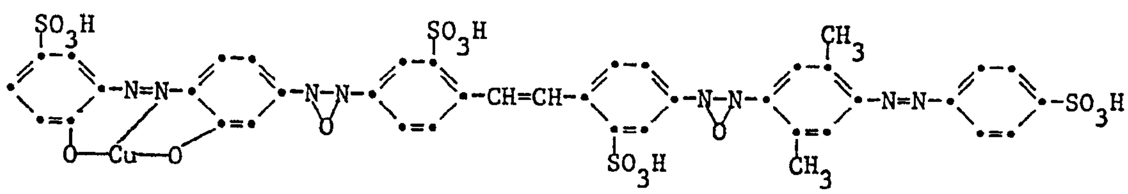

3000 g eines Gemisches aus

16,5 % Phenylbenzoat
38,5 % 2-Methylphenylbenzoat
8 % Ethylenglykol
17 % Isopropanol
2 % Ethanolamin
1,5 % Pineoil und
16,5 % sauren Phosphorsäureester des Adduktes aus 1 Mol p-Nonylphenol und 10 Mol Aethylenoxyd,

6000 g Ammoniumsulfat und

700 g der Dispersion gemäss Beispiel 1 enthält und einen pH-Wert von 5,6 aufweist, während 20 Minuten bei 40°C behandelt. Danach fügt man der Flotte 10 kg Natriumsulfat zu und erhitzt die Flotte während 40 Minuten auf 115°C. Man färbt das Gewebe während 30 Minuten bei dieser Temperatur und kühlt dann das Bad ab. Das gefärbte Gewebe wird gespült und getrocknet.

Durch die Zugabe der Emulsion gemäss Beispiel 1 ist ein schaumfreies Färben gewährleistet. Das Gewebe neigt in der Haspelkufe nicht zum Schwimmen, wodurch eine sehr egale Färbung ermöglicht wird.

Beispiel 5 : In einem Zirkulationsapparat wird eine kreuzspule aus 70 g Baumwolle bei 30°C in 500 ml Wasser eingenetzt. Hierauf werden zur Flotte folgende Zusätze gegeben :

10 ml einer wässrigen 30 %igen Natriumhydroxydlösung,
3 g einer 86 %igen Natriumhydrosulfitlösung
0,3 g der Dispersion gemäss Beispiel 1
0,5 g eines küpenfarbstoffes bestehend aus einer Mischung von Vat. Blue 4 C.I. 69800 und Vat. Blue 6 C.I. 69825 (1 : 3), welche mit Wasser und 5 ml einer 30 %igen, wässrigen Natriumhydroxydlösung vordispergiert worden ist.

Nach der gleichmässigen Verteilung der Zusätze wird die Färbeflotte im Verlauf von 30 Minuten auf 60°C erwärmt und die Baumwolle 30 Minuten bei dieser Temperatur gefärbt. Danach werden der Färbeflotte 6 g Natriumchlorid zugesetzt, worauf die Baumwolle weitere 30 Minuten bei 60°C gefärbt wird. Anschliessend wird das Färbegut warm und kalt gespült und getrocknet. Man erhält eine gleichmässige und echte blaue Färbung der so gefärbten Baumwolle. Während des Färbevorganges tritt kein störender Schaum auf, was bei gleicher Arbeitsweise ohne Emulsion gemäss Beispiel 1 der Fall ist.

Beispiel 6 : In einem Strangfärbeapparat werden 100 kg Wollcablegarn in 3000 Liter Wasser wie folgt gefärbt :

Man erwärmt die Färbeflotte auf 40°C und gibt dann

2000 g Ammoniumsulfat
2000 g einer 80 %igen, wässrigen Essigsäure

1500 g eines Gemisches aus 1 Teil eines mit Dimethylsulfat quaternierten Adduktes aus 1 Mol Fettsäureamin (technisches Amingemisch mit 18 bis 22 kohlenstoffatomen) und 30 Mol Aethylenoxid und 2 Teilen eines mit Sulfaminsäure veresterten Adduktes aus 1 Mol Talgfettsäureamin und 14 Mol Aethylenoxid

500 g der Dispersion gemäss Beispiel 1.

Man führt dann den Materialträger in den Färbeapparat ein. Die Flottenrichtung wird jeweils nach 30 Minuten gewechselt. Es erfolgt dann der Zusatz des gelösten Farbstoffes und zwar 2000 g des 1 : 2-Chrommischkomplexes mit je einem Farbstoff der Formeln

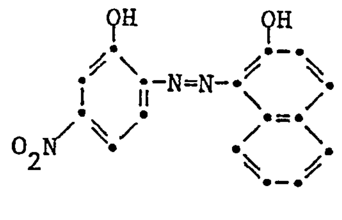

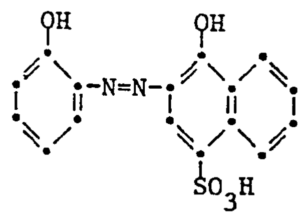

und 2000 g des Farbstoffes der Formel

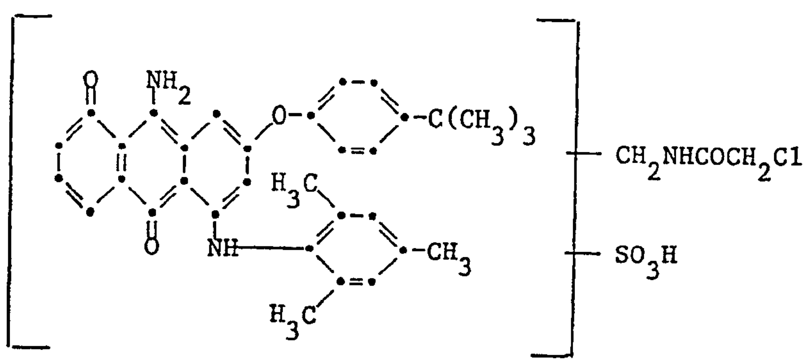

Man erwärmt dann die Flotte im Verlauf von 40 Minuten auf 100°C und hält diese Temperatur während 30 Minuten ein. Dann wird die Flotte abgekühlt und das Gewebe gespült, entwässert und getrocknet. Es resultiert eine egale Färbung. Durch die entlüftende und entschäumende Wirkung der Emulsion gemäss Beispiel 1 bleibt das Färbesystem vollständig schaumfrei.

Beispiel 7 : In einem Strangfärbeapparat (Einstocksystem) werden 100 kg Polyacrylnitril-Hochbauschgarn in 2000 l Wasser zunächst bei 90°C geschrumpft, dann auf 60°C abgekühlt. Dann gibt man die folgenden Komponenten in die Flotte :

1,5 g des Farbstoffes der Formel

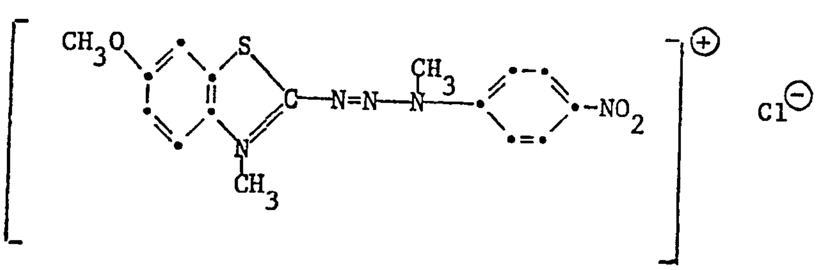

0,13 kg des Farbstoffes der Formel

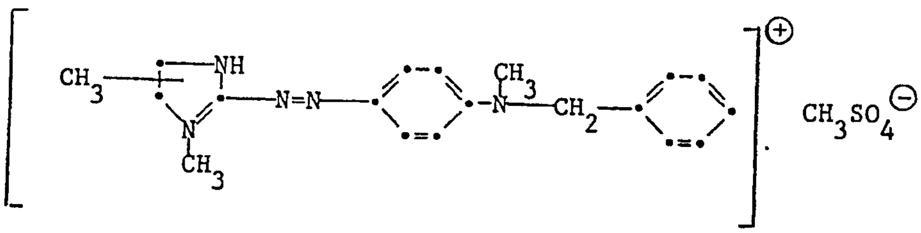

0,5 kg des Farbstoffes der Formel

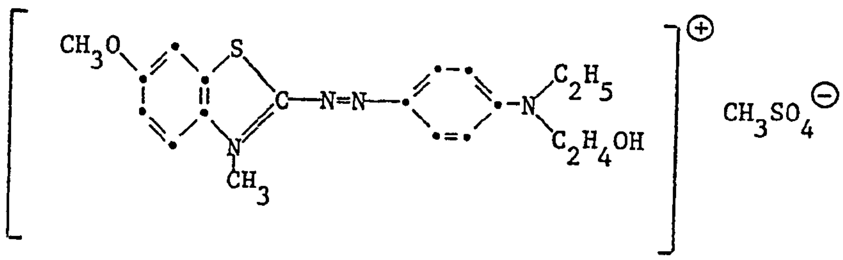

2 kg Essigsäure (80%), 10 kg Natriumsulfat (wasserfrei) und 0,6 kg der Dispersion gemäss Beispiel 1. Nachdem alle Zusätze gleichmässig verteilt sind, wird in 45 Minuten auf kochtemperatur erhitzt und 60 Minuten bei kochtemperatur gefärbt. Anschliessend wird abgekühlt, gespült, entwässert und getrocknet. Das Garn ist egal und echt gefärbt. Färbt man ohne den Zusatz der Emulsion gemäss Beispiel 1, so entstehen infolge von kanalbildung und Lufteinschlüssen fleckige Färbungen.

## Ansprüche

1. Silikonölfreies Entschäumungsmittel für wässrige Systeme, dadurch gekennzeichnet, dass es

(1) 6 bis 12 Gew.% (A) eines Umsetzungsproduktes aus einem propoxylierten Polyol, einer aliphatischen Dicarbonsäure mit 2 bis 10 C-Atomen oder ihrem Anhydrid und einem Umsetzungsprodukt aus einem Polyalkylenglykol und einer Fettsäure oder (B) eines Umsetzungsproduktes aus einem propoxylierten Polyol, einer aliphatischen Dicarbonsäure mit 2 bis 10 C-Atomen oder ihrem Anhydrid, einem höheren aliphatischen Alkohol und einem Polyethylenglykol

(2) 20 bis 50 Gew.% eines Dialkylesters einer ungesättigten Dicarbonsäure

(3) 20 bis 50 Gew.% eines Mineralöls

(4) 5 bis 10 Gew.% eines nichtionogenen Emulgators

(5) 5 bis 10 Gew.% eines anionischen Emulgators und

(6) 0,5 bis 1,5 Gew.% eines Alkylendiamids enthält.

2. Entschäumungsmittel gemäss Anspruch 1, welches als Komponente (I) ein Propylenoxidumsetzungsprodukt aus

(a) einem mindestens 3-wertigen, aliphatischen Alkohol mit 3 bis 10 C-Atomen,

(b) Propylenoxid,

(c) einer aliphatischen ungesättigten Dicarbonsäure oder deren Anhydrid mit 4 bis 10 C-Atomen,

(d) einem Polyethylenglykol der Formel $HO-(CH_2CH_2O)_nH$ worin n eine ganze Zahl von 1 bis 40 bedeutet und

(e) einer Fettsäure mit 16 bis 20 C-Atomen enthält.

3. Entschäumungsmittel gemäss Anspruch 2, worin als Komponente (a) Glycerin, Pentaerytrit, Sorbit oder Trimethylolpropan verwendet wird.

4. Entschäumungsmittel gemäss Anspruch 2, worin als Komponente (c) das Anhydrid einer ethylenisch ungesättigten Dicarbonsäure mit 4 bis 10 C-Atomen verwendet wird.

5. Entschäumungsmittel gemäss Anspruch 4, worin als Komponente (c) Maleinsäureanhydrid verwendet wird.

6. Entschäumungsmittel gemäss Anspruch 5, worin als Komponente (d) ein Polyethylenglykol der Formel $HO-(CH_2CH_2O)_nH$ worin n 4 bis 34 ist, verwendet wird.

7. Entschäumungsmittel gemäss Anspruch 6, worin als Komponente (e) Stearinsäure verwendet wird.

8. Entschäumungsmittel gemäss Anspruch 7, worin als Komponente (a) Pentaerytrit verwendet wird.

9. Entschäumungsmittel gemäss Anspruch 1, welches als Komponente (2) einen Dialkylester einer ethylenisch ungesättigten Dicarbonsäure mit 2 bis 12 C-Atomen je Alkylteil enthält.

10. Entschäumungsmittel gemäss einem der Ansprüche 1 bis 9, welches als Komponente (2) einen Dialkylester der Maleinsäure mit 8 oder 9 C-Atomen je Alkylteil enthält.

11. Entschäumungsmittel gemäss einem der Ansprüche 1 bis 9, welches als Komponente (1) ein Propylenoxidumsetzungsprodukt aus Pentaerytrit, Propylenoxid, Maleinsäureanhydrid, Polyethylenglykol mit einem mittleren Molekulargewicht von 300 bis 600 und Stearinsäure enthält.

12. Entschäumungsmittel gemäss Anspruch 11, welches als Komponente (2) Maleinsäure-di-(2-ethylhexyl)-ester enthält.

13. Entschäumungsmittel gemäss Anspruch 12, welches als Komponente (5) ein Polyoxyethylenderivat der Fettsäureester der Ether des Sorbitans enthält.

14. Entschäumungsmittel gemäss Anspruch 12, welches als Komponente (4) Nonylphenol-decaglykoletherphosphat enthält.

15. Entschäumungsmittel gemäss Anspruch 14, welches als Komponente (6) das Reaktionsprodukt von Ethylendiamin mit Stearinsäure enthält.

16. Entschäumungsmittel gemäss einem der Ansprüche 1 bis 15, welches

7- 9 Gew.% der Komponente (1),
35-38 Gew.% der Komponente (2),
35-38 Gew.% der Komponente (3),
7- 9 Gew.% der Komponente (4),
7- 9 Gew.% der Komponente (5),
0,5-1,5 Gew.% der Komponente (6) enthält.

17. Entschäumungsmittel gemäss Anspruch 1, welches als Komponente (l) ein Propylenoxidumsetzungsprodukt aus

(a) einem mindestens 3-wertigen, aliphatischen Alkohol mit 3 bis 10 C-Atomen,
(b) Propylenoxid,
(c) einer aliphatischen ungesättigten Dicarbonsäure oder deren Anhydrid mit 4 bis 10 C-Atomen,
(d) einem Polyethylenglykol der Formel $HO-(CH_2CH_2O)_nH$ worin n eine n ganze Zahl von 1 bis 40 bedeutet und
(f) ein Fettalkohol mit 12 bis 18 C-Atomen enthält.

18. Entschäumungsmittel gemäss Anspruch 17, worin als Komponente (f) Stearyl- oder Oleylalkohol verwendet wird.

19. Mit Wasser oder organischen Lösungsmitteln verdünnte Entschäumungsmittelzubereitungen, dadurch gekennzeichnet, dass sie 1 bis 99% des Entschäumungsmittels nach einem der Ansprüche 1 bis 18 und 99 bis 1% Wasser oder eines organischen Lösungsmittels enthalten.

20. Verfahren zum Entschäumen wässriger Systeme, dadurch gekennzeichnet, dass man ein Entschäumungsmittel nach einem der Ansprüche 1 bis 18 bzw. die Entschäumungsmittelzubereitungen nach Anspruch 19 verwendet.

## Claims

1. A silicone oil-free antifoaming agent for aqueous systems, which contains

(1) 6 to 12% by weight of (A) a reaction product of a propoxylated polyol, an aliphatic dicarboxylic acid of 2 to 10 carbon atoms or the anhydride thereof and a reaction product of a polyalkylene glycol and a fatty acid, or (B) a reaction product of a propoxylated polyol, an aliphatic dicarboxylic acid of 2 to 10 carbon atoms or the anhydride thereof, a higher aliphatic alcohol and a polyethylene glycol,
(2) 20 to 50% by weight of a dialkyl ester of an unsaturated dicarboxylic acid,
(3) 20 to 50% by weight of a mineral oil,
(4) 5 to 10% by weight of a nonionic emulsifier,
(5) 5 to 10% by weight of an anionic emulsifier, and
(6) 0.5 to 1.5% by weight of an alkylene diamide.

2. An antifoaming agent according to claim 1, which contains as component (1) a propylene oxide reaction product of

(a) an at least trihydric aliphatic alcohol of 3 to 10 carbon atoms,
(b) propylene oxide,
(c) an aliphatic unsaturated dicarboxylic acid of 4 to 10 carbon atoms or the anhydride thereof,

(d) a polyethylene glycol of the formula $HO-(CH_2CH_2O)_nH$, in which n is an integer from 1 to 40, and
(e) a fatty acid of 16 to 20 carbon atoms.

3. An antifoaming agent according to claim 2, in which glycerol, pentaerythritol, sorbitol or trimethylolpropane is used as component (a).

4. An antifoaming agent according to claim 2, in which the anhydride of an ethylenically unsaturated dicarboxylic acid of 4 to 10 carbon atoms is used as component (c).

5. An antifoaming agent according to claim 4, in which maleic anhydride is used as component (c).

6. An antifoaming agent according to claim 5, in which a polyethylene glycol of the formula $HO-(CH_2CH_2O)_nH$ in which n is 4 to 34 is used as component (d).

7. An antifoaming agent according to claim 6, in which stearic acid is used as component (e).

8. An antifoaming agent according to claim 7, in which pentaerythritol is used as component (a).

9. An antifoaming agent according to claim 1, which contains as component (2) a dialkyl ester of an ethylenically unsaturated dicarboxylic acid of 2 to 12 carbon atoms in each alkyl moiety.

10. An antifoaming agent according to any one of claims 1 to 9, which contains as component (2) a dialkyl ester of maleic acid of 8 or 9 carbon atoms in each alkyl moiety.

11. An antifoaming agent according to any one of claims 1 to 9, which contains as component (1) a propylene oxide reaction product of pentaerythritol, propylene oxide, maleic anhydride, polyethylene glycol having an average molecular weight of 300 to 600, and stearic acid.

12. An antifoaming agent according to claim 11, which contains as component (2) di(2-ethyl-hexyl) maleate.

13. An antifoaming agent according to claim 12, which contains as component (5) a polyoxyethylene derivative of a fatty acid ester of a sorbitan ether.

14. An antifoaming agent according to claim 12, which contains as component (4) nonylphenol decaglycol ether phosphate.

15. An antifoaming agent according to claim 14, which contains as component (6) the reaction product of ethylenediamine with stearic acid.

16. An antifoaming agent according to any one of claims 1 to 15, which contains

| | |
|---|---|
| 7- 9 % | by weight of component (1), |
| 35-38 % | by weight of component (2), |
| 35-38 % | by weight of component (3), |
| 7- 9 % | by weight of component (4), |
| 7- 9 % | by weight of component (5), |
| 0.5-1.5 % | by weight of component (6). |

17. An antifoaming agent according to claim 1, which contains as component (1) a propylene oxide reaction product of
(a) an at least tribasic aliphatic alcohol of 3 to 10 carbon atoms,
(b) propylene oxide,
(c) an aliphatic unsaturated dicarboxylic acid of 4 to 10 carbon atoms or the anhydride thereof,
(d) a polyethylene glycol of the formula $HO-(CH_2CH_2O)_nH$ in which n is an integer from 1 to 40 and
(f) a fatty alcohol of 12 to 18 carbon atoms.

18. An antifoaming agent according to claim 17, in which stearyl or oleyl alcohol is used as component (f).

19. An antifoaming agent formulation diluted with water or organic solvents, which contains 1 to 99% of the antifoaming agent according to any one of claims 1 to 18 and 99 to 1% of water or of an organic solvent.

20. A method for defoaming aqueous systems, which comprises using an antifoaming agent according to any one of claims 1 to 18 or an antifoaming agent formulation according to claim 19.

**Revendications**

1. Produit antimousse exempt d'huile de silicone, pour systèmes aqueux, caractérisé en ce qu'il contient
(1) de 6 à 12% en poids (A) d'un produit de réaction obtenu à partir d'un polyol oxypropylé, d'un acide dicarboxylique aliphatique ayant de 2 à 10 atomes de carbone ou de son anhydride, et d'un produit de réaction obtenu à partir d'un polyalkylèneglycol et d'un acide gras, ou (B) d'un produit de réaction obtenu à partir d'un polyol oxypropylé, d'un acide dicarboxylique aliphatique ayant de 2 à 10 atomes de carbone ou de son anhydride, d'un alcool aliphatique supérieur et d'un polyéthylèneglycol,
(2) de 20 à 50% en poids d'un ester dialkylique d'un acide dicarboxylique insaturé,
(3) de 20 à 50% en poids d'une huile minérale,
(4) de 5 à 10% en poids d'un émulsifiant non ionique,
(5) de 5 à 10% en poids d'un émulsifiant anionique et

(6) de 0,5 à 1,5% en poids d'un alkylènediamide.

2. Produit antimousse selon la revendication 1, lequel contient, en tant que composant (1), un produit de réaction de l'oxyde de propylène, obtenu à partir de

(a) un alcool aliphatique à au moins trois fonctions alcool, ayant de 3 à 10 atomes de carbone,

(b) l'oxyde de propylène,

(c) un acide dicarboxylique aliphatique insaturé ou son anhydride, ayant de 4 à 10 atomes de carbone,

(d) un polyéthylèneglycol de formule $HO-(CH_2CH_2O)_nH$, dans laquelle n représente un nombre entier valant de 1 à 40, et

(e) un acide gras ayant de 16 à 20 atomes de carbone.

3. Produit antimousse selon la revendication 2, dans lequel on utilise, en tant que composant (a), le glycérol, le pentaérythritol, le sorbitol ou le triméthylolpropane.

4. Produit antimousse selon la revendication 2, dans lequel on utilise, en tant que composant (c), l'anhydride d'un acide dicarboxylique à insaturation éthylénique, ayant de 4 à 10 atomes de carbone.

5. Produit antimousse selon la revendication 4, dans lequel on utilise l'anhydride maléique en tant que composant (c).

6. Produit antimousse selon la revendication 5, dans lequel on utilise, en tant que composant (d), un polyéthylèneglycol de formule $HO-(CH_2CH_2O)_nH$, dans laquelle n vaut de 4 à 34.

7. Produit antimousse selon la revendication 6, dans lequel on utilise l'acide stéarique en tant que composant (e).

8. Produit antimousse selon la revendication 7, dans lequel on utilise le pentaérythritol en tant que composant (a).

9. Produit antimousse selon la revendication 1, qui contient en tant que composant (2), un ester dialkylique d'un acide dicarboxylique à insaturation éthylénique, ayant de 2 à 12 atomes de carbone dans chaque fragment alkyle.

10. Produit antimousse selon l'une des revendications 1 à 9, qui contient, en tant que composant (2), un ester dialkylique de l'acide maléique ayant 8 ou 9 atomes de carbone dans chaque fragment alkyle.

11. Produit antimousse selon l'une des revendications 1 à 9, qui contient, en tant que composant (1), un produit de réaction d'oxyde de propylène, obtenu à partir de pentaérythritol, d'oxyde de propylène, d'anhydride maléique, d'un polyéthylèneglycol ayant une masse moléculaire moyenne de 300 à 600, et d'acide stéarique.

12. Produit antimousse selon la revendication 11, qui contient du maléate de di(2-éthyl-hexyle) en tant que composant (2).

13. Produit antimousse selon la revendication 12, qui contient, en tant que composant (5), un dérivé polyoxyéthylénique des esters d'acide gras des éthers du sorbitanne.

14. Produit antimousse selon la revendication 12, qui contient du phosphate d'éther de nonylphénol-décaglycol en tant que composant (4).

15. Produit antimousse selon la revendication 14, qui contient en tant que composant (6) le produit de réaction de l'éthylènediamine avec l'acide stéarique.

16. Produit antimousse selon l'une des revendications 1 à 15, qui contient

| | |
|---|---|
| 7- 9 % | en poids du composant (1), |
| 35-38 % | en poids du composant (2), |
| 35-38 % | en poids du composant (3), |
| 7- 9 % | en poids du composant (4), |
| 7- 9 % | en poids du composant (5), |
| 0,5-1,5 % | en poids du composant (6). |

17. Produit antimousse selon la revendication 1, qui contient en tant que composant (1) un produit de réaction de l'oxyde de propylène, obtenu à partir de

(a) un alcool aliphatique à au moins trois fonctions alcool, ayant de 3 à 10 atomes de carbone,

(b) l'oxyde de propylène,

(c) un acide dicarboxylique aliphatique insaturé ou son anhydride, ayant de 4 à 10 atomes de carbone,

(d) un polyéthylèneglycol de formule $HO-(CH_2CH_2O)_nH$, dans laquelle n représente un nombre entier valant de 1 à 40, et

(f) un alcool gras ayant de 12 à 18 atomes de carbone.

18. Produit antimousse selon la revendication 17, dans lequel on utilise l'alcool stéarylique ou oléylique en tant que composant (f).

19. Compositions de produit antimousse diluées avec de l'eau ou des solvants organiques, caractérisées en ce qu'elles contiennent de 1 à 99% du produit antimousse selon l'une des revendications 1 à 18, et de 99 à 1% d'eau ou d'un solvant organique.

20. Procédé pour l'élimination de mousse dans des systèmes aqueux, caractérisé en ce que l'on utilise

un produit antimousse selon l'une des revendications 1 à 18 ou les compositions de produit antimousse selon la revendication 19.